Europäisches Patentamt

European Patent Office

Office européen des brevets

(11) Publication number: **0 042 212**
A1

# EUROPEAN PATENT APPLICATION

(21) Application number: 81302171.4

(22) Date of filing: 15.05.81

(51) Int. Cl.³: **F 17 D 5/06,** G 01 M 3/28

(30) Priority: 16.06.80 GB 8019654

(43) Date of publication of application: 23.12.81
Bulletin 81/51

(84) Designated Contracting States: **BE DE FR GB IT NL**

(71) Applicant: IMPERIAL CHEMICAL INDUSTRIES LIMITED,
Imperial Chemical House Millbank, London SW1P 3JF
(GB)

(72) Inventor: Atkinson, Peter, 33 Langbaurgh Close Great
Ayton, Middlesbrough Cleveland (GB)

(74) Representative: Martin, David Lincoln et al, Imperial
Chemical Industries Limited Legal Department : Patents
Thames House North Millbank, London SW1P 4QG (GB)

(54) **Pipeline leak location.**

(57) The position of a leak in a gas or liquid pipeline is accurately determined by measuring the amplitude of rarefactions propagated through the gas or liquid at least two monitoring points, one each upstream and downstream of the leak. The leak position is calculated using the formula

$$Y = \frac{1}{2} \left[ \frac{\ln \gamma}{\alpha} + S \right]$$

where
Y is the distance of the leak from one of the monitoring points;
S is the distance between two monitoring points, one on each side of the leak;
$\gamma$ is the amplitude ratio of the rarefactions received by the two monitoring points, and
$\alpha$ is the exponential attenuation factor with distance for the propagation of the rarefaction in the fluid.

1

Pipeline leak location

THE PRESENT INVENTION relates to an improved
method for detecting the position of a leak in a
pipeline containing a fluid under pressure.

The use of pipelines, both on land and under the
sea, to carry liquids and gases has increased
appreciably in recent years and continues to increase.
Transport by pipeline is convenient and more economical
than other means of transportation and once laid,
pipelines require little maintenance and generally can be
used for long periods of time, measured in years, before
major servicing is required.  However an ever-present risk
in the use of pipelines is that the line may rupture and
allow an escape of gas or liquid.

There is therefore a need for an apparatus and
method which will enable a pipeline operator to have both
rapid warning of an escape of liquid or gas from the
pipeline and an accurate indication of the location of
the leak.  United Kingdom Patent Specification No.
1,438,237 describes how a rapid escape of fluid from a
pipeline causes decompression waves to travel within the
pipeline fluid in both directions away from the leak site.
These decompression waves, or rarefactions, can be
detected by monitoring the dynamic pressure of the fluid.
Furthermore, the Specification describes how the leak
position can be located by measuring the difference in
time of arrival of the decompression wave at detectors
installed on either side of the leak.

We have now found that the position of a leak in
a pipeline can be determined by a method which may be
used either as an alternative to or complementarily to
earlier known methods.

According to the present invention a method of
determining the existence and location of a distantly
occurring leak of fluid from a pipeline or pressure
vessel carrying fluid under pressure comprises measuring
the amplitude of the rarefactions propagated through the

fluid by the leak at at least two monitoring points, at least one point being upstream of the leak and at least one point being downstream of the leak, and calculating the position of the leak using the equation

$$Y = \tfrac{1}{2}\left[\frac{\ln\gamma}{\alpha} + S\right]$$

where     Y is the distance of the leak from one of the monitoring points;

S is the distance between two monitoring points, one on each side of the leak;

$\gamma$ is the amplitude ratio of the rarefactions received by the two monitoring points; and

$\alpha$ is the exponential attenuation factor with distance for the propagation of the rarefaction in the fluid.

In its simplest form, the method of the invention is used with only two monitoring points and this will usually be sufficient to determine accurately the location of the leak. However, if desired, additional monitoring points can be employed to provide confirmatory determinations of the leak position.

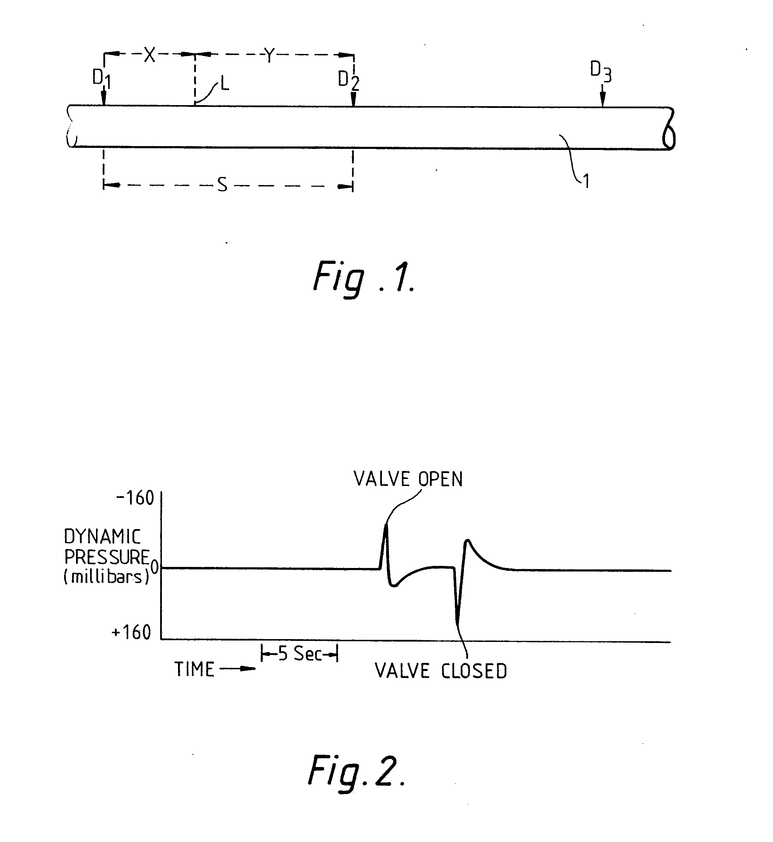

The equation given hereinbefore for determining the leak position is derived as follows. Referring to the accompanying schematic drawing, (Fig. 1) a section of a pressure vessel 1 is shown. At intervals along the length of the pressure vessel are positioned monitoring stations $D_1$, $D_2$, $D_3$ ............$D_n$.

Suppose a leak occurs from the pressure vessel 1 at the point marked L. Let the distance from the leak to the two monitoring stations $D_1$ and $D_2$ be X and Y respectively and let the distance between $D_1$ and $D_2$ be S.

The rarefaction is attenuated exponentially with distance. Thus the attenuation between the leak and station $D_1$ is $\exp^{-\alpha X}$. Similarly the attenuation between the leak and station $D_2$ is $\exp^{-\alpha Y}$, where $\alpha$ is the exponential attenuation factor. The exponential attenuation factor, $\alpha$, varies for different fluids and different pipeline characteristics but the factor is readily determinable for any given fluid and pipeline by simulation of a leak in the pipeline, as hereinafter described.

The amplitude ratio, $\gamma$ of the two rarefactions received at $D_1$, $D_2$ is given by

$$\gamma = \frac{\exp^{-\alpha X}}{\exp^{-\alpha Y}} \tag{1}$$

or

$$\gamma = \exp^{-\alpha (X-Y)} \tag{2}$$

Taking logarithms to base e

$$\ln \gamma = -\alpha (X-Y) \quad \text{or} \quad \frac{\ln \gamma}{\alpha} = Y-X \tag{3}$$

Also,     $S = X+Y$
is the distance between $D_1$ and $D_2$  (4)

Adding (3) and (4)

$$\frac{\ln \gamma}{\alpha} + S = 2Y$$

The only unknown is Y, the distance from the leak to station $D_2$, which can therefore be calculated.

The amplitude of the rarefactions may be measured using any known suitable apparatus but the Applicants have found apparatus of the type described in UK Patents Nos. 1,374,797 and 1,438,237 to be particularly suitable.

Experiments to test the feasibility of the method of this invention were carried out in a spur line of an ethylene pipeline. The escape of ethylene through a leak in the pipeline was simulated by rapidly opening a valve in the 6" spur line for a few seconds.

A transient pressure wave leak detector was located some 10 miles from the leak. The detector was a micro-computer-based system in which the sensors are piezoelectric transducers which monitor the dynamic pressure of the ethylene.

The pressure pulse created by the leak travelled along the pipeline at the velocity of sound in ethylene and arrived at the detector after about ½ minute.  The pulse then travelled onto the end of the spur line (about a further mile distant) and was reflected back to the detector.

It was detected and then travelled back to the leak source which was close to the other end of the spur. The pulse was again reflected and travelled back to the receiver.  Thus the detector received a series of the signals from the same leak, allowing the attenuation to be measured.  Knowing the attenuation the position of any subsequent leak can be determined.

(In normal practice, of course, the pulse would continue along the pipe line and two monitoring stations located either side of the leak would be used).

It was found that the pressure pulse peak amplitude was linearly proportional to the leak area and, over the range measured, to line pressure.  The average attenuation of the pressure pulse with distance was found, in this instance, to be 0.65 $\pm$ 0.05 dB/mile.

The effect of opening and closing the valve in the spur line to simulate the leak is illustrated in Figure 2 which is a plot of the dynamic pressure in the line with time.

The method of the present invention provides a novel way of determining accurately the position of the leak.  The method can be used on its own or in conjunction with other methods, thereby providing confirmatory results.  This is a particularly important consideration in dealing with leaks in difficultly accessible locations, for example underground or undersea pipelines, where considerable expense is involved in reaching the leak.  Accurate information on the leak position is essential to avoid unnecessary expense.

<u>Claim</u>

1.      A method of determining the existence and location of a distantly occurring leak of fluid from a pipeline or pressure vessel carrying fluid under pressure which comprises measuring the amplitude of the rarefactions propagated through the fluid by the leak at at least two monitoring points, at least one point being upstream of the leak and at least one point being downstream of the leak, and calculating the position of the leak using the equation

$$Y = \tfrac{1}{2} \left[ \frac{\ln \gamma}{\alpha} + S \right]$$

where      Y is the distance of the leak from one of the monitoring points;

S is the distance between two monitoring points, one on each side of the leak;

$\gamma$ is the amplitude ratio of the rarefactions received by the two monitoring points; and

$\alpha$ is the exponential attenuation factor with distance for the propagation of the rarefaction in the fluid.

Fig .1.

Fig.2.

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | F 17 D 5/06 G 01 M 3/28 |
| | OIL & GAS JOURNAL, vol. 77, no. 48, November 26, 1979 (US) W.E. LAWSON: "How to detect breaks in pipelines automatically" pages 82-86 <br><br> * the whole document * <br><br> -- | claim | |
| E | WO - A - 80/01941 (KOMMUNALPROEKT) <br><br> * abstract; figures * <br><br> -- | claim | TECHNICAL FIELDS SEARCHED (Int. Cl.3) <br><br> F 17 D G 01 M |
| E | WO - A - 80/01943 (KOMMUNALPROEKT) <br><br> * abstract; figures * <br><br> ------ | claim | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 07-09-1981 | VERELST |

EPO Form 1503.1 06.78